# EUROPEAN PATENT SPECIFICATION

(11) **EP 2 499 894 B1**
(45) Date of publication and mention of the grant of the patent: **02.07.2014**
(21) Application number: 11157994.2
(22) Date of filing: 14.03.2011
(51) Int. Cl.: A01D 34/00, A01D 34/125, A01D 34/49, A01D 34/71

(54) **Lawnmowers**
Rasenmäher
Tondeuses à gazon

(43) Date of publication of application: 19.09.2012
(73) Proprietor: Robert Bosch GmbH, 70442 Stuttgart (DE)
(72) Inventor: Coussins, Adrian, Stownmarket, Suffolk IP14 1TT (GB)

(56) References cited:
- FR-A1- 2 940 880
- US-A- 2 599 883
- US-A- 2 715 810
- US-A1- 2003 182 919
- US-A1- 2010 115 901

## Description

The present invention relates to lawnmowers, in particular to walk-behind lawnmowers having a mulching function.

More particularly, the present invention relates to the return of the grass clippings created by a lawnmower, such as a rotary lawnmower in which a cutter blade is caused to rotate within an cutter bowl on the underside of the mower, back into the lawn, thus avoiding the requirement for the user to collect and then dispose of the collected clippings. Loss of fertility from the lawn being cut, the physical task and time spent emptying the grassbag or box and environmental issues associated with disposal of the collected clippings are all avoided.

Many lawnmowers (so-called collecting mowers) are fitted with a collection device in the form of a grassbox or bag to collect the clippings from a discharge chute which is in communication with the cutter bowl. Many of these lawnmowers can be used without the collection device fitted, so that once cut grass has passed through the discharge chute it is deflected by a guard downwards onto the grass surface.

A further solution to this problem has resulted in the development of so-called mulching mowers. These machines do not have a discharge chute through which the clippings are directed to a collection device. Instead, cut grass is recirculated within the cutter bowl. Discharge of finely divided grass clippings takes place at the periphery of the blade, between the underside of the machine and the lawn.

Recent years have seen the development of combined mowers in which a plug is fittable into the discharge chute of a collecting mower, closing it and thereby forcing the cut material to be recirculated within the bowl and discharged in a manner similar to mulching mowers.

However, mulching mowers or collecting mowers operating in non-collect mode, leave the clippings on top of the grass which has just been cut, making it highly visible. As the grass clippings die off, the appearance of the lawn is affected. The appearance problem is exacerbated when the grass clippings are not evenly spread over the lawn, as can particularly occur when the grass is damp. Clippings can be deposited in swaths or the clippings can accumulate within the bowl, occasionally being released in a clump.

Furthermore, mulching mowers or collecting mowers fitted with a plug blocking the discharge chute do not work properly if set at too low height of cut.

Accordingly, there are at least three problems associated with existing solutions to the process of returning cut grass clippings created by rotary mowers into the lawn. The present invention seeks to provide a solution to these problems.

US 2715810 discloses a cylinder lawn mower having a shield designed to deflect cut grass back towards the cutting cylinder so as to cut the grass into small pieces. The shield also acts to prevent grass and other material from striking the legs of the user walking behind the mower.

US2003/0182919 describes a rotary mower having a rear discharge chute selectively closeable by means of a closure flap or into which a grass collection bag may be inserted. The mower also has side discharge chutes, similarly selectively closeable, against which a side discharge deflector may be coupled to allow propulsion of grass clippings sideways, away from the user.

The present invention provides a lawnmower comprising a rotatable cutter blade mounted within a cutting cavity and a discharge chute having an inlet in communication with the cutting cavity and discharge chute outlet formed in a face of the lawnmower and obstructable by means of a closure flap; wherein the lawnmower further comprises a discharge deflector guard mountable adjacent the discharge chute outlet to enclose said outlet and receive, in use, grass cuttings therefrom, wherein the deflector guard forms a substantially air/grass cutting-tight seal with said face of the lawnmower; and wherein the guard has an operatively inner surface having a substantially vertical portion forming a discharge aperture with said face of the lawnmower and extending below a cutting height of the lawnmower.

Preferably, the inner surface of the guard forms a substantially continuous surface with an upper surface of discharge chute.

Preferably, the substantially vertical portion extends to a distance S below a level of the cutter blade, wherein S is at least 5mm, preferably at least 10mm, more preferably about 15mm or more. Most preferably, S is about 18mm.

Preferably, the substantially vertical portion comprises a skirt having a flange at a lowermost edge thereof.

Preferably, the guard comprises a pair of side walls spaced by a rear wall.

Preferably, the rear wall has a curved upper wall portion and a substantially planar lower wall portion.

Preferably, an inner surface of the guard is provided with at least one longitudinal rib.

Preferably, the discharge aperture has a dimension front-to-rear, in use, of from 15mm to 25mm, preferably from 18 to 20 mm.

Preferably, the discharge deflector guard is arranged to pivot about an operatively substantially horizontal axis adjacent an upper edge thereof.

Preferably, the discharge chute closure flap is biased by a closure force into a position whereby the outlet of the discharge chute is obstructable by the closure flap and wherein the closure force acts to hold the discharge deflector guard in position.

Preferably, the guard is dimensionally selected to provide a discharge aperture between the guard and the body of the lawnmower such that air flowing through the discharge aperture in use flows at a speed of about 5m/s or more.

Preferably, the discharge chute has a discharge chute area and the discharge aperture has a discharge aperture area which is selected to be less than about 50% of the discharge chute area; preferably less than 25%.

The above and other aspects of the present invention will now be described in further detail, by way of example only, with reference to the accompanying drawings, in which:
Figure 1 is a sectional view of a part of a lawnmower including a first embodiment of a discharge deflector guard in accordance with the present invention;
Figure 2 is a part perspective rear view of the embodiment of Figure 1;

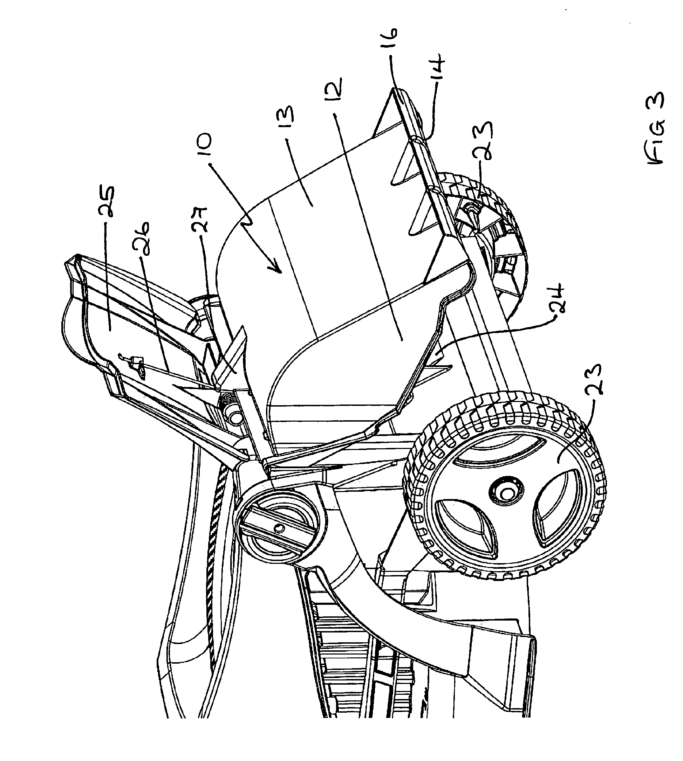

Figure 3 corresponds with Figure 2, with the guard in an elevated position;
Figure 4 is a rear perspective view of the discharge deflector guard of Figure 1;
Figure 5 is a front perspective view of the guard of Figure 4; and
Figure 6 is a sectional view, corresponding to that of Figure 1, of a lawnmower including a second embodiment of a guard in accordance with the present invention.

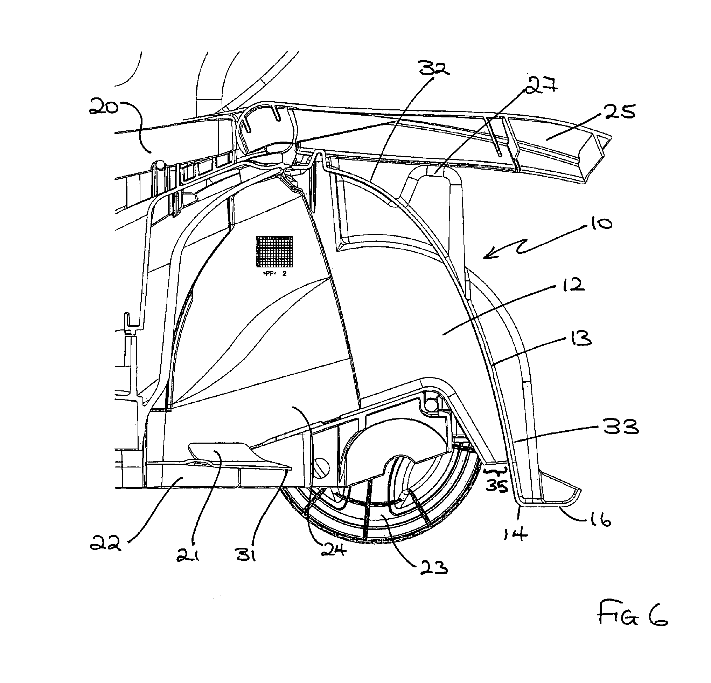

Referring to the figures, the illustrated embodiment of a lawnmower discharge deflector guard 10 typically has a pair of side walls 11, 12 spaced by a rear wall 13 which extends operatively downwards to form a skirt 14. Guard 10 is mountable to a lawnmower 20 by any suitable means, such as hooks 15 locatable on corresponding fixtures on the body of the lawnmower. Guard 10 is designed to form a substantially air/grass clipping-tight seal with a rear face of the lawnmower body, forming a discharge aperture 35 (Fig.6) facing substantially vertically downwardly into the cut grass.

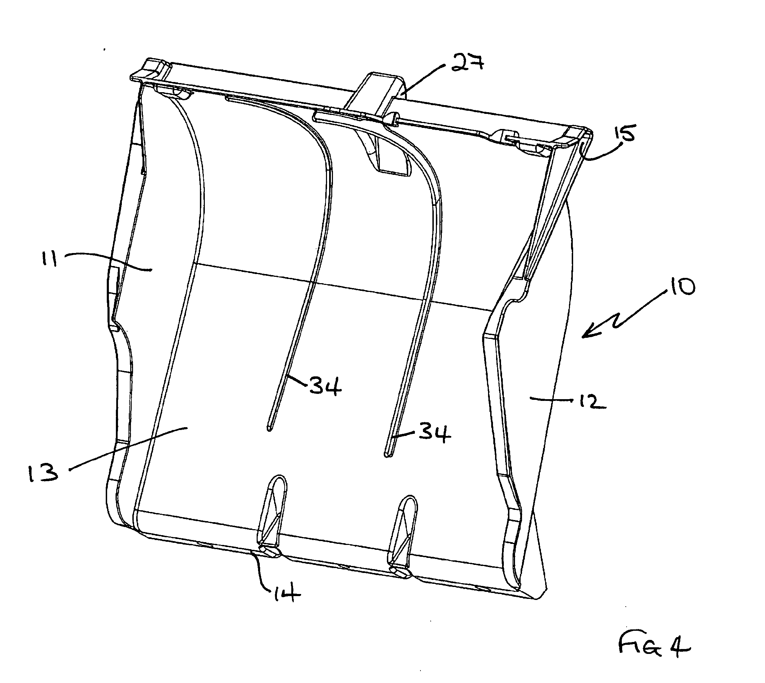

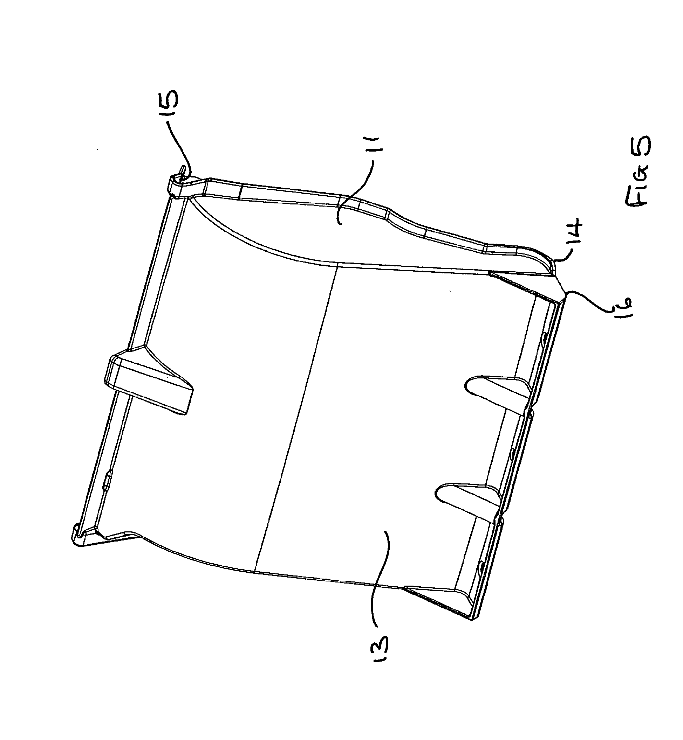

As shown in Figures 4 and 5, attachment points 15 are formed as deep pockets. This allows a degree of movement for the guard either up and down or rotation with respect to the lawnmower body, for example to allow the guard to swing back if it should contact the ground during turning movements when the lawnmower may be tilted backwards onto its rear wheels.

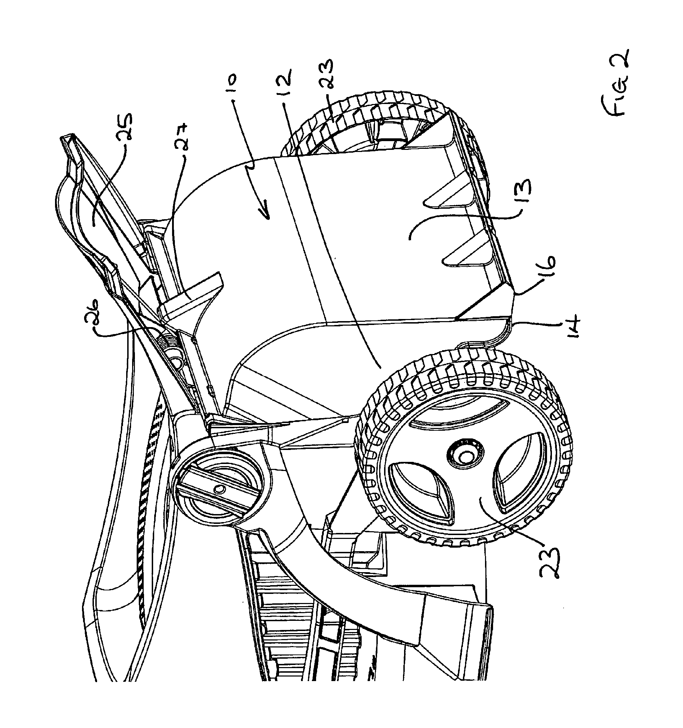

In a conventional manner, lawnmower 20 has a blade 21 mounted to the output shaft of an electric motor or petrol engine (not shown) within a cutting bowl 22 on the underside of the lawnmower 20. The lawnmower 20 is carried on wheels 23 or rollers (not shown) or a combination thereof. A discharge chute 24 is provided communicating between bowl 22 and, in a conventional walk-behind machine, a grass collection container, to collect grass cuttings produced by blade 21. The lawnmower includes a discharge chute closure flap 25 which acts, in use, to obstruct discharge chute 24 to prevent user access to the rotating blade when the lawnmower is being used without the collection container. Closure flap 25 is pivotally mounted to the lawnmower body and is biased into a closed position by means of a spring 26 (Fig.2). In order to fit the discharge deflector guard 10 to the mower, the closure flap 25 is raised fully against its spring bias. When the discharge deflector guard 10 (Fig.6) is in position, the closure flap 25 is released into contact with guard 10, whereby the spring bias of the closure flap provides a force to locate and retain the discharge deflector guard 10 in position.

The height of cut of the lawnmower is set by adjusting the position of the front or rear wheel pair (or both pairs) with respect to the body of the lawnmower and thus with respect to blade 21 and is thus defined by the difference between the lowermost edge 30 of wheels 23 and the cutting edge 31 of blade 21. A height of cut of about 60mm would be typical.

Wall 13 of discharge deflector guard 10 forms a generally continuous surface with the upper wall of discharge chute 24 to enhance air/grass flow from the discharge chute to and through discharge aperture 35. In the embodiment shown, wall 13 has a generally arcuate upper portion 32 curving from the point at which it meets the body of the lawnmower adjacent discharge chute 24 to an intermediate point at which the wall continues to form a generally planar lower wall portion 33 extending to skirt 14. Alternative shapes to wall 13 are suitable. For example, the upper portion of wall 13 may comprise a pair of orthogonal substantially planar wall portions; or may include a single inclined upper wall surface, inclined with respect to lower wall portion 33. Skirt 14 may be omitted from the lower edge of wall 13.

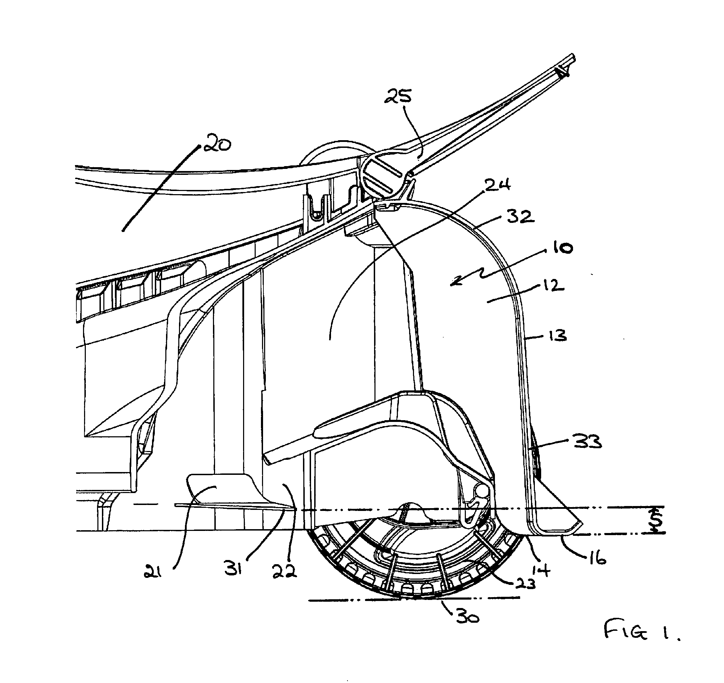

Figure 6 shows a variation on the embodiment of Figure 1 in which the lower portion of wall 13 is more inclined. Figure 6 also shows closure flap 25 bearing against a projection 27 moulded into guard 10.

In order to aid forcing of grass clippings into the lawn in use, lower wall portion 33 is designed to extend below the height of cutting edge 31 of blade 21, by a separation S. In preferred embodiments S is at least 5mm and is more preferably at least 10mm. Values of 15mm or more, particularly about 18mm have been found to be especially satisfactory at forcing clippings deep into the cut sward.

It will be seen therefore that, for a typical rear discharge mower, lower wall portion 33 extends below the lower edge of the existing rear face of the mower body. The lower edge of this face is typically at or even slightly above the height of the blade cutting edge.

In the preferred embodiment shown, skirt 14 is provided with a flange 16 to provide an improved gliding movement of the guard over the lawn and thereby enhance manoeuvrability to the lawnmower. This is especially advantageous if the guard should make contact with the ground when the mower is tilted back on its rear wheels. In such conditions, the guard may be momentarily rotated rearwardly out of its intended position against the spring bias of closure flap 25.

As shown in Figure 4, the internal surface of wall 13 is advantageously provided with longitudinal ribs 34. These act to modify the airflow distribution across the width of the discharge aperture 35 to optimise the uniformity of deposition of clippings into the grass sward. Such ribs project from wall 13 suitably by approximately 10mm and run directly down the internal face of wall 13 or, as appropriate, curving partly to the left or right as required to create an even grass cuttings distribution for a particular lawnmower design.

The discharge deflector guard 10 extends across the entire width of the rear of lawnmower and forms a substantially air/grass clipping-tight seal with it, so providing improved performance over a simple discharge chute plug arrangement, providing improved spread of clippings over the cut area. The low skirt 14 forces clippings deep into the cut surface rather than merely allowing the clippings to drop onto the surface.

Discharge aperture 35 is preferably substantially elongate, suitably rectangular or generally rectangular, in shape having its long axis orientated across the width of the lawnmower and its short axis in the direction of mower travel. To achieve a good distribution of grass cuttings, the discharge aperture 35 should be at least 40% of the cutting width of the lawnmower, preferably 50% or more.

It will be appreciated that the discharge chute has a cross-sectional area, as does the discharge aperture 35 (Fig. 6) formed between the discharge deflector guard 10 and the lower rear extremity of the body of the lawnmower. The dimensions of discharge aperture 35 are preferably selected such that air is output, in use, through this aperture with an air speed of about 5m/s or more. It will be appreciated that the input air speed will be dependent upon the air flow generated by the cutting blade and any associated fan and the area and length of the discharge chute and will thus vary from lawnmower to lawnmower. The area of the discharge aperture and thus the dimensions of guard 10 will be selected accordingly. A speed of about 5m/s or more ensures that grass cuttings are adequately forced into the lawn. In a typical embodiment, the area of the discharge aperture is selected to be less than about 50% the area of the discharge chute; preferably less than 30% of the area. In lawnmowers having a cutting width of up to 40cm, a ratio of discharge aperture area to discharge chute area of less than 20% has been found to be appropriate, particularly about 14%. In lawnmowers having a cutting width of 40cm up to about 45cm, a ratio of over 15% was found to be advantageous, especially a ratio of about 22%. Typically, this corresponds to a typical front-to-rear dimension to discharge aperture 35 of from 15mm to 25mm, more typically about 18mm to about 20mm.

## Claims

1. A lawnmower comprising a rotatable cutter blade (21) mounted within a cutting cavity (22) and a discharge chute (24) having an inlet in communication with the cutting cavity (22) and discharge chute outlet formed in a face of the lawnmower and obstructable by means of a closure flap (25); **characterized in that** the lawnmower further comprises a discharge deflector guard mountable adjacent the discharge chute outlet to enclose said outlet and receive, in use, grass cuttings therefrom, wherein the deflector guard forms a substantially air/grass cutting-tight seal with said face of the lawnmower; and wherein the guard has an operatively inner surface having a substantially vertical portion forming a discharge aperture (35) with said face of the lawnmower and extending below a cutting height of the lawnmower.

2. A lawnmower as claimed in claim 1 wherein the inner surface of the discharge deflector guard (10) forms a substantially continuous surface with an upper surface of discharge chute (24).

3. A lawnmower as claimed in claim 1 or claim 2 wherein the substantially vertical portion of the discharge deflector guard (10) extends to a distance S below a level of the cutter blade, wherein S is at least 5mm, preferably at least 10mm, more preferably about 15mm or more.

4. A lawnmower as claimed in claim 3, wherein S is about 18mm.

5. A lawnmower as claimed in any one of claims 1 to 4 wherein the substantially vertical portion of the discharge deflector guard (10) comprises a skirt (14) having a flange (16) at a lowermost edge thereof.

6. A lawnmower as claimed in any one of claims 1 to 5 wherein the discharge deflector guard (10) comprises a pair of side walls (11, 12) spaced by a rear wall (13).

7. A lawnmower as claimed in claim 6, wherein the rear wall (13) of the discharge deflector guard (10) has a curved upper wall portion (32) and a substantially planar lower wall portion (33).

8. A lawnmower as claimed in any one of claims 1 to 7, wherein an inner surface of the discharge deflector guard (10) is provided with at least one longitudinal rib.

9. A lawnmower as claimed in any preceding claim wherein the discharge aperture has a dimension front-to-rear, in use, of less than about 30mm, preferably from 15mm to 25mm, more preferably from 18 to 20 mm.

10. A lawnmower as claimed in any preceding claim wherein the discharge aperture (35) is substantially elongate having a long axis orientated across a width of the lawnmower.

11. A lawnmower as claimed in claim 10, wherein the discharge aperture (35) has a width of 40% of the cutting width of the lawnmower or more, preferably 50% or more.

12. A lawnmower as claimed in any preceding claim, wherein the discharge deflector guard (10) is arranged to pivot about an operatively substantially horizontal axis adjacent an upper edge thereof.

13. A lawnmower as claimed in claim 12, wherein the discharge chute closure flap (25) is biased by a closure force into a position whereby the outlet of the discharge chute (24) is obstructable by the closure flap (25) and wherein the closure force acts to hold the discharge deflector guard (10) in position.

14. A lawnmower as claimed in any preceding claim, wherein the guard is dimensionally selected to provide a discharge aperture between the guard (10) and the body of the lawnmower such that air flowing through the discharge aperture (35) in use flows at a speed of about 5m/s or more.

15. A lawnmower as claimed in claim 14, wherein the discharge chute has a discharge chute area and the discharge aperture has a discharge aperture area which is selected to be less than about 50% of the discharge chute area; preferably less than 25%.

## Patentansprüche

1. Rasenmäher, umfassend ein drehbares Schneidmesser (21), das in einem Schneidhohlraum (22) montiert ist, und eine Austragrutsche (24) mit einem Einlass, der mit dem Schneidhohlraum (22) in Verbindung steht, und einem Austragrutschenauslass, der in einer Fläche des Rasenmähers gebildet ist und mittels einer Verschlussklappe (25) versperrt werden kann, **dadurch gekennzeichnet, dass** der Rasenmäher ferner einen Austragumlenkschutz umfasst, der in der Nähe des Austragrutschenauslasses montiert werden kann, um den Auslass zu umschließen und im Gebrauch den Grasschnitt davon aufzunehmen, wobei der Umlenkschutz mit der Fläche des Rasenmähers eine im Wesentlichen luft-/grasschnittdichte Abdichtung bildet und wobei der Schutz eine betriebsmäßig innere Fläche mit einem im Wesentlichen vertikalen Abschnitt hat, der mit der Fläche des Rasenmähers eine Austragöffnung (35) bildet und sich unterhalb einer Schnitthöhe des Rasenmähers erstreckt.

2. Rasenmäher nach Anspruch 1, wobei die innere Fläche des Austragumlenkschutzes (10) eine im Wesentlichen durchgehende Fläche mit einer oberen Fläche der Austragrutsche (24) bildet.

3. Rasenmäher nach Anspruch 1 oder 2, wobei sich der im. Wesentlichen vertikale Abschnitt des Austragumlenkschutzes (10) bis zu einem Abstand S unter ein Niveau des Schneidmessers erstreckt, wobei S mindestens 5 mm, vorzugsweise mindestens 10 mm, besonders bevorzugt ungefähr 15 mm oder mehr beträgt.

4. Rasenmäher nach Anspruch 3, wobei S ungefähr 18 mm beträgt.

5. Rasenmäher nach einem der Ansprüche 1 bis 4, wobei der im Wesentlichen vertikale Abschnitt des Austragumlenkschutzes (10) einen Schurz (14) mit einem Flansch (16) an einem untersten Rand davon umfasst.

6. Rasenmäher nach einem der Ansprüche 1 bis 5, wobei der Austragumlenkschutz (10) ein Paar Seitenwände (11, 12) umfasst, die durch eine Rückwand (13) beabstandet sind.

7. Rasenmäher nach Anspruch 6, wobei die Rückwand (13) des Austragumlenkschutzes (10) einen gebogenen oberen Wandabschnitt (32) und einen im Wesentlichen planaren unteren Wandabschnitt (33) hat.

8. Rasenmäher nach einem der Ansprüche 1 bis 7, wobei eine innere Fläche des Austragumlenkschutzes (10) mit mindestens einer Längsrippe versehen ist.

9. Rasenmäher nach einem der vorhergehenden Ansprüche, wobei die Austragöffnung im Gebrauch von vorne nach hinten eine Abmessung von weniger als ungefähr 30 mm, vorzugsweise von 15 mm bis 25 mm und besonders bevorzugt von 18 bis 20 mm hat.

10. Rasenmäher nach einem der vorhergehenden Ansprüche, wobei die Austragöffnung (35) im Wesentlichen länglich ist und eine über eine Breite des Rasenmähers ausgerichtete Längsachse hat.

11. Rasenmäher nach Anspruch 10, wobei die Breite der Austragöffnung (35) 40% oder mehr, vorzugsweise 50% oder mehr, der Schnittbreite des Rasenmähers beträgt.

12. Rasenmäher nach einem der vorhergehenden Ansprüche, wobei der Austragumlenkschutz (10) so angeordnet ist, dass er um eine betriebsmäßig im Wesentlichen horizontale Achse in der Nähe eines oberen Randes davon schwenkt.

13. Rasenmäher nach Anspruch 12, wobei die Austragrutschenverschlussklappe (25) durch eine Schließkraft in eine Position vorgespannt ist, wodurch der Auslass der Austragrutsche (24) durch die Verschlussklappe (25) versperrt werden kann, und wobei die Schließkraft so wirkt, dass der Austragumlenkschutz (10) in Position gehalten wird.

14. Rasenmäher nach einem der vorhergehenden Ansprüche, wobei der Schutz abmessungsmäßig so gewählt ist, dass er eine Austragöffnung zwischen dem Schutz (10) und dem Körper des Rasenmähers bereitstellt, so dass die Strömungsgeschwindigkeit von Luft, die im Gebrauch durch die Austragöffnung (35) strömt, ungefähr 5 m/s oder mehr beträgt.

15. Rasenmäher nach Anspruch 14, wobei die Austragrutsche eine Austragrutschenfläche hat und die Austragöffnung eine Austragöffnungsfläche hat, die so gewählt ist, dass sie weniger als ungefähr 50% und vorzugsweise weniger als 25% der Austragrutschenfläche beträgt.

## Revendications

1. Tondeuse à gazon comprenant une lame de coupe rotative (21) montée à l'intérieur d'une cavité de coupe (22) et une goulotte d'évacuation (24) ayant une entrée en communication avec la cavité de coupe (22) et une sortie de goulotte d'évacuation formée dans une face de la tondeuse à gazon et pouvant être obturée au moyen d'un volet de fermeture (25) ; **caractérisée en ce que** la tondeuse à gazon comprend en outre un élément de protection déflecteur d'évacuation pouvant être monté de manière adjacente à la sortie de goulotte d'évacuation pour entourer ladite sortie et recevoir, lors de l'utilisation, l'herbe coupée à partir de celle-ci, l'élément de protection déflecteur formant avec ladite face de la tondeuse à gazon un joint d'étanchéité sensiblement étanche à l'air/l'herbe coupée ; et l'élément de protection ayant une surface fonctionnellement intérieure ayant une portion sensiblement verticale formant avec ladite face de la tondeuse à gazon un orifice d'évacuation (35) et s'étendant en dessous d'une hauteur de coupe de la tondeuse à gazon.

2. Tondeuse à gazon selon la revendication 1, dans laquelle la surface intérieure de l'élément de protection déflecteur d'évacuation (10) forme une surface sensiblement continue avec une surface supérieure de la goulotte d'évacuation (24).

3. Tondeuse à gazon selon la revendication 1 ou la revendication 2, dans laquelle la portion sensiblement verticale de l'élément de protection déflecteur d'évacuation (10) s'étend jusqu'à une distance S en dessous d'un niveau de la lame de coupe, S étant au moins 5 mm, de préférence au moins 10 mm, de manière plus préférée environ 15 mm ou plus.

4. Tondeuse à gazon selon la revendication 3, dans laquelle S est environ 18 mm.

5. Tondeuse à gazon selon l'une quelconque des revendications 1 à 4, dans laquelle la portion sensiblement verticale de l'élément de protection déflecteur d'évacuation (10) comprend une jupe (14) ayant un rebord (16) à un bord inférieur de celle-ci.

6. Tondeuse à gazon selon l'une quelconque des revendications 1 à 5, dans laquelle l'élément de protection déflecteur d'évacuation (10) comprend une paire de parois latérales (11, 12) espacées par une paroi arrière (13).

7. Tondeuse à gazon selon la revendication 6, dans laquelle la paroi arrière (13) de l'élément de protection déflecteur d'évacuation (10) a une portion de paroi supérieure (32) incurvée et une portion de paroi inférieure (33) sensiblement plane.

8. Tondeuse à gazon selon l'une quelconque des revendications 1 à 7, dans laquelle une surface intérieure de l'élément de protection déflecteur d'évacuation (10) est pourvue d'au moins une nervure longitudinale.

9. Tondeuse à gazon selon l'une quelconque des revendications précédentes, dans laquelle l'orifice d'évacuation a une dimension d'avant en arrière, lors de l'utilisation, de moins d'environ 30 mm, de préférence de 15 mm à 25 mm, plus préférablement de 18 à 20 mm.

10. Tondeuse à gazon selon l'une quelconque des revendications précédentes, dans laquelle l'orifice d'évacuation (35) est sensiblement allongé et a un axe longitudinal orienté en travers d'une largeur de la tondeuse à gazon.

11. Tondeuse à gazon selon la revendication 10, dans laquelle l'orifice d'évacuation (35) a une largeur représentant 40 % de la largeur de coupe de la tondeuse à gazon ou plus, de préférence 50 % ou plus.

12. Tondeuse à gazon selon l'une quelconque des revendications précédentes, dans laquelle l'élément de protection déflecteur d'évacuation (10) est agencé pour pivoter autour d'un axe fonctionnellement sensiblement horizontal adjacent à un bord supérieur de celui-ci.

13. Tondeuse à gazon selon la revendication 12, dans laquelle le volet de fermeture (25) de goulotte d'évacuation est sollicité par une force de fermeture jusqu'à une position grâce à laquelle la sortie de la goulotte d'évacuation (24) peut être obturée par le volet de fermeture (25), et dans laquelle la force de fermeture agit de manière à maintenir l'élément de protection déflecteur d'évacuation (10) en position.

14. Tondeuse à gazon selon l'une quelconque des revendications précédentes, dans laquelle l'élément de protection est sélectionné dimensionnellement pour produire un orifice d'évacuation entre l'élément de protection (10) et le corps de la tondeuse à gazon tel que l'air s'écoulant à travers l'orifice d'évacuation (35) s'écoule, lors de l'utilisation, à une vitesse d'environ 5 m/s ou plus.

15. Tondeuse à gazon selon la revendication 14, dans laquelle la goulotte d'évacuation a une zone de goulotte d'évacuation et l'orifice d'évacuation a une zone d'orifice d'évacuation qui est sélectionnée de manière à représenter moins qu'environ 50 % de la zone de goulotte d'évacuation, de préférence moins que 25 %.
